**Europäisches Patentamt**

**European Patent Office**

**Office européen des brevets**

(19)

(11) Veröffentlichungsnummer : **0 213 543**
**B1**

(12) ## EUROPÄISCHE PATENTSCHRIFT

(45) Veröffentlichungstag der Patentschrift :
**19.10.88**

(21) Anmeldenummer : **86111479.1**

(22) Anmeldetag : **19.08.86**

(51) Int. Cl.⁴ : **B 60 G 21/04**, F 16 C 33/22,
F 16 C 27/06

(54) **Lager mit geteiltem Gehäuse für Stabilisatoren oder dergleichen in Kraftfahrzeugen.**

(30) Priorität : **03.09.85 DE 3531340**

(43) Veröffentlichungstag der Anmeldung :
**11.03.87 Patentblatt 87/11**

(45) Bekanntmachung des Hinweises auf die Patenterteilung : **19.10.88 Patentblatt 88/42**

(84) Benannte Vertragsstaaten :
**FR GB IT SE**

(56) Entgegenhaltungen :
**EP-A- 0 132 502**
**AT-B-    317 697**
**DE-B- 1 119 062**
**DE-C-    812 748**
**DE-C- 2 737 898**
**FR-E-    81 477**
**GB-A- 1 516 572**
**GB-A- 2 010 759**
**US-A- 3 218 053**
**US-A- 3 315 952**

(73) Patentinhaber : **Lemförder Metallwaren AG**
**Postfach 1220**
**D-2844 Lemförde (DE)**

(72) Erfinder : **Hahle, Hermann**
**Bergstrasse 53**
**D-2845 Damme (DE)**

(74) Vertreter : **Bruse, Willy Hans Heinrich**
**Edisonstrasse 14**
**D-2800 Bremen 33 (DE)**

EP 0 213 543 B1

## Beschreibung

Die Erfindung betrifft ein Lager mit geteiltem Gehäuse für Stabilisatoren oder dergleichen in Kraftfahrzeugen mit Ausbildungsmerkmalen nach dem Oberbegriff des Patentanspruches 1.

Ein gattungsbildendes Lager ist aus der DE-B-1 119 062 bekannt. Es ist für die drehelastische Befestigung von Drehstabfedern bestimmt. Die beiden Gehäuseteile werden durch aufgeschobene Ringe zusammengehalten. Der Anwendung solcher Lager zur Lagerung von Stabilisatoren oder dergleichen in Kraftfahrzeugen steht entgegen, daß die Lagerstelle bzw. Lagerstellen der Stabilisatoren einen kleineren Durchmesser aufweisen als die geschmiedeten Enden der Stabilisatoren. Lager nach dem erwähnten Stande der Technik sind daher für diesen Zweck nicht verwendbar.

Es entspricht dem praktisch ausgeübten Stande der Technik, das Gehäuse des Lagers für Stabilisatoren in einer Achsebene zu teilen und die beiden Lagerteile bei der Montage miteinander zu verschrauben. Die elastische Innenbuchse ist dabei in Längsrichtung an einer Stelle geschlitzt, wobei die Außenfläche der Innenbuchse konturiert ist und in ein entsprechendes Gegenprofil an der Innenfläche des zweiteiligen Gehäuses eingreift. Durch das Verspannen der Innenbuchse beim Zusammenbau des Gehäuses umschließt die Innenbuchse auch die Lagerstelle des Stabilisators, so daß auch hierdurch Reibschluß ein Festsitz entsteht. Die Drehwinkel des Stabilisators gegenüber dem Gehäuse werden ausschließlich durch Molekularverformung des Werkstoffes der Innenbuchse kompensiert. Aufgrund der hohen Radialbelastung solcher Lager und der gleichzeitig auftretenden Drehwinkel sind frühzeitige Verschleißerscheinungen zu erkennen. Bei ungenügendem Festsitz der Innenbuchse auf dem Stabilisator rutscht der Stabilisator durch, womit ein starker Abrieb verbunden ist, der die Lebensdauer der Innenbuchse verkürzt. Bei freier Verformbarkeit der Innenbuchse aus elastomerem Werkstoff kann dieser Werkstoff an den Enden unkontrolliert hervorquellen, wodurch die Funktionsfähigkeit des Lagers schnell verlorengeht und eine frühzeitige Zerstörung eintritt. Unerwünscht ist auch das bei der Molekularverformung sich aufbauende hohe Rückstellmoment solcher Lager.

Es ist Aufgabe der Erfindung, ein Lager mit geteiltem Gehäuse für Stabilisatoren oder dergleichen in Kraftfahrzeugen in der Weise zu gestalten, daß es große Verdrehwinkel bei minimalem Rückstellmoment zuläßt und unabhängig von Körpermaßen neben der Lagerstelle leicht maßhaltig montierbar ist.

Diese Aufgabe löst die Erfindung durch eine Ausbildung mit Merkmalen nach dem Patentanspruch 1.

Zu den wesentlichen Vorteilen dieser Ausbildungsmerkmale gehört die Schaffung eines geteilten Gleitlagers für Anwendungsfälle, wie sie vorwiegend bei der Lagerung von Stabilisatoren von Kraftfahrzeugen, insbesondere Stabilisatoren in Lastkraftwagen, auftreten. Dieses Gleitlager mit der Elastizität herkömmlicher Lager für den gleichen Zweck ist einfach und genau zu montieren, wobei es jedoch die Torsionsbewegungen des Stabilisators gegenüber dem Gehäuse, insbesondere bei Einbringung eines Schmiermittels zwischen Innenbuchse und Gleithülse praktisch ohne Rückstellmoment gleitend kompensiert. Torsionsbewegungen wirken sich somit nicht mehr molekularverformend auf die Innenbuchse aus elastomerem Werkstoff aus. Dies ermöglicht den weiteren wesentlichen Vorteil, daß diese Innenbuchse aus elastomerem Werkstoff bei Anwendung der erfindungsgemäßen Ausbildungsmerkmale ausgesteift werden kann, um radiale und axiale Belastungen besser aufnehmen zu können. Bei einer besonderen Ausführungsform der Erfindung ist vorgesehen, daß diese in den elastomeren Werkstoff der Innenbuchse eingebettete Aussteifung aus Halbschalen besteht, die an beiden Enden aus dem Gehäuse herausragende und das Gehäuse mit einem Winkel von etwa 90 Grad umgreifende Kragenflansche aufweisen. Dadurch werden axiale Belastungen optimal aufgenommen, und es wird vor allem das stirnseitige Herausquellen des Materials der Innenbuchse aus dem Gehäuse bei starker Belastung verhindert. Gleichzeitig wird dieser Kragenflansch als Hilfsmittel beim Zwischentransport und bei der Montage des Lagers verwendet. Um die Vormontage des Lagers zu erleichtern, sind nämlich die beiden stirnseitigen Kragenflansche leicht nach innen gestellt, damit die Gleithülse durch die dabei entstehende leichte Klemmung an den Außenseiten des Gehäuses bis zur Fertigmontage gehalten wird. Die Innenbuchse aus elastomerem Werkstoff wird ihrerseits durch den Ansaugeffekt des Gleitfettes bis zur Endmontage genügend sicher in der Gleithülse festgehalten. Das zwischen dem Außenmantel der Innenhülse und dem Innenmantel der z. B. aus Kunststoff oder einer Kombination aus Kunststoff und einem Metallgewebe, aus Stahl mit einem Bronzegerüst oder aus einem anderen geeigneten Werkstoff hergestellten Gleitschale eingebrachte Schmiermittel wird durch die winkelversetzte Anordnung der Stoßfuge des Gehäuses gegenüber der Stoßfuge der Innenbuchse und der Gleitschale fixiert und somit am Herausquellen gehindert. An den Stirnseiten wird die Anordnung von Dichtlippen an den Kragenflanschen der Innenbuchse vorgeschlagen, mit denen sich das Material der Innenbuchse dichtend gegen den Kragenflansch der Gleitschale legt.

Auf der Zeichnung ist ein Ausführungsbeispiel der Erfindung zu deren näherer Erläuterung dargestellt.

Es zeigen :

Figur 1 eine schematische Darstellung eines Stabilisators in einem Kraftfahrzeug mit zwei Lagerstellen in einem stark verkleinernden Maßstab,

Figur 2 einen Querschnitt durch ein Lager gemäß der Erfindung in einem gegenüber Figur 1 vergrößerten Maßstab,

Figur 3 einen Längsschnitt durch das Lager nach Figur 2 teilweise,

Figur 4 einen Längsschnitt durch die Innenbuchse mit Gleitschale nach Figur 3 teilweise,

Figur 5 die Einzelheit « X » in Figur 3 stark vergrößert,

Figur 6 eine Darstellung der Innenbuchse teilweise im Schnitt, teilweise in Ansicht, in einem gegenüber den Figuren 2 bis 4 vergrößerten Maßstab und

Figur 7 eine teilweise Seitenansicht der Innenbuchse nach Figur 6.

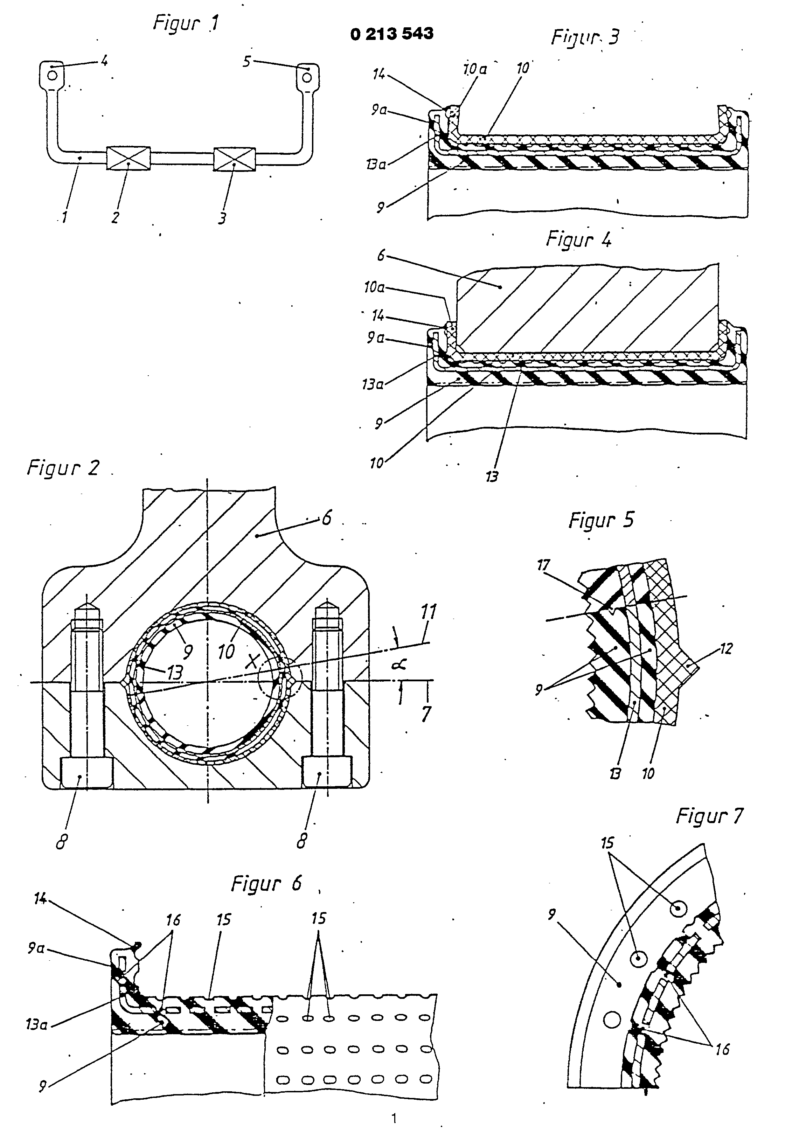

Das in den Figuren 2 bis 7 dargestellte Lager ist insbesondere als Stütze für einen Stabilisator 1 an den Stellen 2 und 3 bestimmt, welcher verkleinert und schematisch in der Figur 1 mit den meistens angeschmiedeten, verdickten Enden 4 und 5 dargestellt ist. Das Lager weist ein zweiteiliges Gehäuse 6 mit einer die Längsachse einschließenden Teilungsebene 7 auf. Die beiden Teile des Gehäuses 6 sind durch Spannschrauben miteinander verspannbar. In dem Lager ist eine Innenbuchse 9 aus einem elastomeren Werkstoff drehbeweglich innerhalb einer Gleithülse 10 gelagert. Sowohl die Innenbuchse 9 als auch die Gleitschale 10 sind aus zwei Halbschalenteilen gebildet, jedoch in der Weise angeordnet, daß die Teilungsebene 11 der Innenbuchse 9 und der Gleitschale 10 mit der Teilungsebene 7 des Gehäuses einen Winkel Alpha einschließt (Figur 2). Dadurch liegen auch die Teilungsfugen des Gehäuses 6 und der Gleithülse 10 bzw. der Innenbuchse 9 versetzt zueinander, so daß sie sich gegenseitig abdichten. Im Bereich der Teilungsebene 7 sind die Kanten der beiden Teile des Gehäuses 6 mit einer Anfasung versehen, so daß im montierten Gehäuse 6 beidseitig eine parallel zur Lagerachse verlaufende Nut gebildet wird. In diese beiden Nuten greifen die Halbschalen der Gleithülse 10 je mit einem entsprechend gestalteten Vorsprung 12 ein, der an den Halbschalen gegenüber der Teilungsebene 11 jeweils um den Winkel Alpha versetzt ist (Figuren 2 und 5). Eine Drehung der Gleithülse 10 gegenüber dem Gehäuse 6 ist dadurch ausgeschlossen. Die innerhalb der Gleithülse 10 drehbar gelagerte Innenbuchse 9 aus elastomerem Werkstoff weist eine innere Versteifungseinlage 13, z. B. eine Blechhülse oder dergleichen auf. Die Gleithülse 10 und die Innenbuchse 9 mit der Versteifungseinlage 13 überragen die Breite des Gehäuses 6 an beiden Enden und weisen außerhalb des Gehäuses einen radial nach außen gestellten Kragenrand auf, der das Gehäuse 6 etwa mit einem Winkel von 90 Grad umgreift. Aus Gründen der Montage ist der Kragenrand 10a der Gleithülse 10 im vormontierten Zustand leicht über 90 Grad hinaus gebogen und nach innen gestellt, so daß die Gleithülse sich nach der Montage an den Außenseiten des Gehäuses 6 festklemmt und somit für die Vormontage eine ausreichende Verliersicherung darstellt. Gegen die Außenseite des radial gerichteten Kragenflansches 10a der Gleithülse 10 legt sich eine Dichtlippe 14 am Kragenrand 9a der Innenbuchse 9 und verhindert somit das Herausquellen des zwischen dem Außenmantel der Innenbuchse 9 und dem Innenmantel der Gleithülse 10 eingebrachten Schmiermittels. Auch die in dem elastomeren Werkstoff der Innenbuchse eingebettete Versteifung 13 weist einen radial gerichteten Kragenrand 13a auf, durch den das stirnseitige Herausquellen des Werkstoffes der Innenbuchse 9 bei stärkerer Belastung vermieden wird. Zur Aufnahme des Schmiermittels am Außenumfang der Innenbuchse 9 werden vorteilhaft Ausnehmungen 15, z. B. sogenannte Wabenmuster, vorgesehen. Nach einem besonderen Vorschlag der Erfindung sollen an den Stellen der Ausnehmung 15 am Außenumfang der Innenbuchse 9 in den Schalenteilen der Versteifung 13 Bohrungen 16 angeordnet sein, so daß nach der Vulkanisation des elastomeren Werkstoffes dieser schwindet und an der Außenfläche der Innenbuchse 9 die Vertiefungen 15 entstehen. Um ein Auswandern des Schmiermittels in der Teilungsebene 11 zur Stabilisatorfläche nach innen zu verhindern, sind in der Schalenhälfte Dichtungen vorgesehen. Auf der einen Stirnseite eine Nut, auf der anderen eine Feder 17, die beide korrespondierende Schrägflächen aufweisen, so daß bei der Montage der beiden um 180 Grad zueinander gedrehten Halbschalen jeweils beim Verspannen eine Feder 17 in eine Nut eingreift und somit die gewünschte Dichtwirkung erzielt wird.

**Patentansprüche**

1. Lager mit geteiltem Gehäuse (6) für Stabilisatoren (1) oder dergleichen in Kraftfahrzeugen, welches in dem Gehäuse (6) eine Innenbuchse (9) aus einem elastomeren Werkstoff aufweist, bei dem beide in einer Achsebene geteilt sind, dadurch gekennzeichnet, daß die Innenbuchse (9) lose in eine in dem Gehäuse angeordnete, in einer Achsebene ebenfalls geteilte Gleithülse (10) eingesetzt ist, wobei diese Teilungsebene (11) der Innenbuchse (9) und der Gleithülse (10) mit der Teilungsebene (7) des Gehäuses (6) einen Winkel einschließt und an den Teilungsflächen längsverlaufende, durch Anfasung der Kanten am Innenumfang des Gehäuses gebildete Nuten vorgesehen sind, in die Vorsprünge (12) der Gleithülse (10) eingreifen.

2. Lager nach Anspruch 1, dadurch gekennzeichnet, daß die Gleithülse (10) an beiden Enden einen das Gehäuse (6) mit einem Winkel von etwa 90 Grad umgreifenden, radial gerichteten Kragenrand (10a) aufweist.

3. Lager nach den Ansprüchen 1 und 2, dadurch gekennzeichnet, daß die Innenbuchse (9) aus elastomerem Werkstoff Versteifungseinlagen (13) aus Metall aufweist.

4. Lager nach den Ansprüchen 1 bis 3, dadurch gekennzeichnet, daß die Innenbuchse (9) und auch deren Versteifungseinlage (13) das Gehäuse an beiden Enden mit einer radial gerichteten Kragenrandausbildung (9a, 13a) umgreifen.

5. Lager nach den Ansprüchen 1 bis 4, dadurch gekennzeichnet, daß der Kragenrand (10a) der Gleithülse (10) das Gehäuse (6) mit einer Vorspannung umgreift.

6. Lager nach den Ansprüchen 1 bis 5, dadurch gekennzeichnet, daß die Versteifungseinlage (13) aus einer Blechhülse mit Wandungsdurchbrechungen (16) besteht.

7. Lager nach den Ansprüchen 1 bis 6, dadurch gekennzeichnet, daß die Wandungsdurchbrechungen (16) in der die Innenbuchse (9) aus elastomerem Werkstoff versteifenden Blechhülse (13) im Negativmuster einer auf der Außenfläche der Innenbuchse (9) vorgesehenen Aufnahmetaschen (15) für Schmiermittel bildenden Wabenstruktur oder dergleichen angeordnet sind.

## Claims

1. Bearing with a divided housing (6) for antiroll bars (1) or similar in motor vehicles, which comprises in the housing (6) an inner bush (9) of an elastomeric material, both being divided in an axial plane, characterised in that the inner bush (9) is loosely inserted in a slide sleeve (10), which is arranged in the housing and is also divided in an axial plane, this dividing plane (11) of the inner bush (9) and the slide sleeve (10) forming an angle with the dividing plane (7) of the housing (6), and longitudinal grooves, which are formed by chamfering the edges at the internal circumference of the housing and in which projections (12) of the slide sleeve (10) engage, being provided at the dividing planes.

2. Bearing according to claim 1, characterised in that the slide sleeve (10) comprises at both ends a collar flange (10a) which extends in the radial direction and encompasses the housing (6) at an angle of approximately 90°.

3. Bearing according to claims 1 and 2, characterised in that the inner bush (9), which consists of an elastomeric material, comprises reinforcing inserts (13) of metal.

4. Bearing according to claims 1 to 3, characterised in that the inner bush (9) and its reinforcing insert (13) encompass the housing at both ends with a collar flange structure (9a, 13a) which extends in the radial direction.

5. Bearing according to claims 1 to 4, characterised in that the collar flange (10a) of the slide sleeve (10) encompasses the housing (6) in a prestressed state.

6. Bearing according to claims 1 to 5, characterised in that the reinforcing insert (13) consists of a sheet metal sleeve with perforations (16).

7. Bearing according to claims 1 to 6, characterised in that the perforations (16) are arranged in the sheet metal sleeve (13), which reinforces the inner bush (9) of an elastomeric material, in a reversed pattern of a honeycomb structure or similar forming pockets (15), provided on the external surface of the inner bush (9), for lubricant.

## Revendications

1. Palier à boîtier divisé (6) pour stabilisateurs (1) ou analogues de véhicules automobiles, qui présente, à l'intérieur du boîtier (6), une bague intérieure (9) faite d'un matériau élastomère, ces deux éléments étant divisés dans un plan axial, caractérisé en ce que la bague intérieure (9) est montée libre dans un coussinet (10) disposé dans le boîtier, lui aussi divisé dans un plan axial, le plan de division (11) de la bague intérieure (9) et du coussinet (10) formant un certain angle avec le plan de division (7) du boîtier (6), et en ce que des rainures s'étendent longitudinalement le long des surfaces de division, formées par chanfreinage des bords de la périphérie intérieure du boîtier pour recevoir des saillies (12) du coussinet (10).

2. Palier selon la revendication 1, caractérisée en ce que le coussinet (10) présente à chacune de ses deux extrémités, une collerette (10a) dirigée radialement, qui emboîte le boîtier (6) en formant un angle d'environ 90°.

3. Palier selon les revendications 1 et 2, caractérisé en ce que la bague intérieure (9) en matériau élastomère présente des armatures de renforcement métalliques (13).

4. Palier selon les revendications 1 à 3, caractérisé en ce que la bague intérieure (9) et aussi son armature de renforcement (13) emboîtent le palier à chacune de ses deux extrémités par une collerette (9a, 13a) orientée radialement.

5. Palier selon les revendications 1 à 4, caractérisé en ce que la collerette (10a) du coussinet (10) emboîte le boîtier (6) avec une précontrainte.

6. Palier selon les revendications 1 à 5, caractérisé en ce que l'armature de renforcement (13) est composée d'une douille de tôle présentant des interruptions (16) de sa paroi.

7. Palier selon les revendications 1 à 6, caractérisé en ce que les interruptions de parois (16) de la douille en tôle (13) qui renforce la bague intérieure (9) en matériau élastomère sont disposées dans le motif négatif d'une structure à nid d'abeilles ou similaires qui forme des poches de retenue (15) dans la surface externe de la bague intérieure (9) pour contenir du lubrifiant.

**0 213 543**

Figur 1

Figur 3

Figur 4

Figur 2

Figur 5

Figur 6

Figur 7